# EUROPÄISCHE PATENTSCHRIFT

(11) **EP 1 224 403 B1**
(45) Veröffentlichungstag und Bekanntmachung des Hinweises auf die Patenterteilung: **13.04.2005**
(21) Anmeldenummer: 00972842.9
(22) Anmeldetag: 23.10.2000
(51) Int. Cl.: F16D 27/112

(54) **DOPPELKUPPLUNG MIT EINEM ELEKTROMAGNETEN**
DUAL CLUTCH, COMPRISING AN ELECTROMAGNET
DOUBLE EMBRAYAGE DOTE D'UN ELECTROAIMANT

(30) Priorität: 26.10.1999 DE 29918793 U; 26.10.1999 DE 19951631
(43) Veröffentlichungstag der Anmeldung: 24.07.2002
(73) Patentinhaber: ZF FRIEDRICHSHAFEN Aktiengesellschaft, 88038 Friedrichshafen (DE)
(72) Erfinder: SCHNEIDER, Rudolf, 88074 Meckenbeuren (DE); FRONIUS, Helmut, 88090 Immenstaad (DE); MIEHLE, Frank, 88090 Immenstaad (DE); SCHMIED, Eckhard, 88049 Oberteuringen (DE); SMEDEK, Arthur, 88090 Immenstaad (DE)
(86) Internationale Anmeldenummer: PCT/EP2000/010409
(87) Internationale Veröffentlichungsnummer: WO 2001/031218

(56) Entgegenhaltungen:
- EP-A- 0 841 497
- DD-A- 266 624
- DE-A- 4 021 310
- US-A- 2 407 757
- US-A- 4 564 092

## Beschreibung

Die Erfindung betrifft eine Doppelkupplung mit einem Elektromagneten nach dem Oberbegriff von Anspruch 1 sowie ein Riemengetriebe und eine Drehmaschine mit einer solchen Doppelkupplung.

Derartige Doppelkupplungen werden hauptsächlich in Werkzeugmaschinen zur Drehzahlabstufung des Hauptantriebs angewendet. Sie können aber auch für Maschinen mit ähnlichem Antriebskonzept und für Fahrantriebe, z. B. in Elektrofahrzeugen eingesetzt werden. Mit ihnen wird in der Regel ein preiswerter Zweigangantrieb mit einem frei wählbaren Stufensprung und mit einer spielfreien Drehmomentübertragung realisiert, der einfach zu schalten ist und einen geringen Platz beansprucht. Ferner ist der Montage- und Wartungsaufwand gering. Schließlich besitzen die Doppelkupplungen eine hohe Laufruhe und die Temperaturentwicklung am Spindelstock ist sehr gering.

Derartige Doppelkupplungen sind aus dem Typenblatt Nr. 6643757701 vom April 1999 der ZF Maschinenantriebe GmbH bekannt. Mit den sogenannten Zweigangkupplungen werden zwei Getriebeabstufungen im Zusammenwirken von zwei Riementrieben, einer elektromagnetisch betätigten Kupplung und einer Dauermagnetkupplung in Einflächenbauart erreicht. Die Zweigangkupplung besteht aus einem fest mit einer Maschinenwand verbundenen Elektromagneten und einer mittels Paßfeder auf einer Welle fixierten Rotorgruppe, die für die Aufnahme von Riemenscheiben vorgesehen ist. Die beiden Rotoren sind mit Wälzlagern, die eine Lebensdauerfettfüllung aufweisen, auf einem Nabenteil gelagert. Zwischen den Rotoren sitzt ein als Ankerscheibe ausgebildeter Anker, dessen axiale Bewegung durch Membranfedern ermöglicht wird. Die Membranfedern sind einerseits an dem Nabenteil und andererseits an der Ankerscheibe befestigt und übertragen das Drehmoment spielfrei. Der ringförmige Elektromagnet ragt, nur durch einen schmalen Luftspalt getrennt, in den ersten Rotor, während der zweite Rotor einen ringförmigen Dauermagneten enthält. Die dem Anker zugewandten Stirnflächen der Rotoren bilden die Pol- und Reibflächen für die jeweils im Zusammenspiel mit dem Anker wirkende Kupplung. Im unbestromten Zustand des Elektromagneten wird die Ankerscheibe vom Dauermagneten angezogen, so daß diese Kupplung geschlossen ist. Wird der Elektromagnet bestromt, wird das Magnetfeld des Permanentmagneten geschwächt und die Ankerscheibe vom Elektromagneten angezogen, so daß die zuvor geschlossene Kupplung öffnet, während die andere Kupplung schließt. Die Membranfeder besitzt in axialer Richtung nur eine geringe Federsteifigkeit, damit sie den Magnetkräften keinen zu großen Widerstand entgegensetzt. In Umfangsrichtung ist sie jedoch sehr steif, so daß sie spielfrei große Drehmomente übertragen kann.

Um die Durchflutung der Ankerscheibe nicht zu stören und dadurch die Magnetkräfte zu reduzieren, besitzen die als Reibflächen dienenden Polflächen des Elektromagneten und des Permanentmagneten sowie der Ankerscheibe keine Reibbeläge. Da so die Wahl der Reibpaarungen begrenzt ist, kann das übertragbare Reibmoment weitgehend nur durch die Größe der Magnete bestimmt werden. Ferner wird durch die Größe der Magnete die Schaltzeit beeinflußt, die außer von den axial wirkenden Kräften von den axial zu bewegenden Massen beeinflußt wird.

Aus der EP 0 341 653 B1 ist eine Antriebseinrichtung mit einer elektromagnetisch betätigten Doppelkupplung bekannt, bei der eine Ankerscheibe zwischen zwei Rotoren angeordnet ist und mittels eines Elektromagneten und eines Dauermagneten auf einer Getriebewelle in einer Außenverzahnung axial verschiebbar ist. Wegen der Axialverschiebung muß die Ankerscheibe mit Spiel in der Außenverzahnung geführt sein, so daß das Drehmoment nicht spielfrei übertragen wird. Ferner ist die Führung mit Reibung behaftet, die dem Schaltablauf entgegenwirkt, wodurch höhere Schaltkräfte erforderlich sind.

Aus der DE-OS 1 575 907 ist ein elektromagnetisch gekuppeltes Schaltgetriebe mit einer Einscheibenkupplung bekannt. Zwischen zwei Keilriemenscheiben sitzt eine Kupplungsscheibe, die an ihren Stirnseiten Reibbeläge aufweist, fest auf einer Motorwelle. Zu beiden Seiten der Kupplungsscheibe sind auf einem Nabenteil der Kupplungsscheibe eine Druckglocke und eine Ankerplatte zur Kupplungsscheibe axial verschiebbar gelagert, wobei die Druckglocke und die Ankerplatte über Distanzstücke verbunden sind, die die Kupplungsscheibe durchdringen und das Drehmoment von der Motorwelle auf eine der Keilriemenscheiben übertragen. Die Ankerplatte arbeitet mit einem im Gehäuse angeordneten Elektromagneten zusammen, der im bestromten Zustand die Ankerplatte mit den Distanzstücken, der Druckglocke und den auf dieser Einheit über Kugellager drehbar gelagerten Keilriemenscheiben axial verschiebt bis die entsprechende Keilriemenscheibe an dem gegenüberliegenden Reibbelag der Kupplungsscheibe anliegt und ein Reibschluß hergestellt wird.

Im stromlosen Zustand des Elektromagneten öffnet eine Schraubenfeder, die sich einerseits an einer Stirnfläche der Motorwelle und andererseits an der Druckglocke abstützt, den Reibschluß zwischen den Reibflächen und verschiebt die Einheit in die entgegengesetzte axiale Richtung, bis die andere Keilriemenscheibe an der gegenüberliegenden Reibfläche der Kupplungsscheibe anliegt und einen Reibschluß herstellt. Die so gebildete Doppelkupplung besitzt große Massen, die während des Schaltvorgangs axial zu bewegen sind. Ferner sind die axialen Führungen mit erheblichen Reibkräften behaftet, zumal sie durch die Spannkräfte der Keilriemen belastet werden. Um kurze Schaltzeiten zu ermöglichen, muß die Druckfeder entsprechend stark dimensioniert werden. Dies erfordert andererseits einen ebenfalls stark dimensionierten Elektromagneten, der neben den großen Schaltkräften die Kraft aufbringen muß, um die Druckfeder entsprechend vorzuspannen.

Aus der DE 42 15 528 A1 ist ferner eine Einfachkupplung bekannt, bei der ein Elektromagnet eine Ankerscheibe mit einer Reibfläche gegen eine entsprechende Reibfläche eines Rotors zieht, der mit einer Keilriemenscheibe verbunden ist. Die Ankerscheibe ist mit Haltearmen einer Nabe über drei auf den Umfang verteilte, ringförmige Blattfedern verbunden. Die Nabe ist auf einer Kompressorwelle befestigt. Die Blattfedern besitzen eine nierenförmige Grundform, wobei die Gestalt und die Lage der Blattfedern eine gewisse Torsionsdämpfung bewirken, wenn ein Drehmoment von der Ankerplatte auf die Nabe übertragen wird. Die Blattfedern, die aus einem Werkstoff mit einer hohen magnetischen Reluktanz hergestellt sind, z. B. aus einem rostfreien Stahl, bewegen die Ankerplatte in eine geöffnete Position, wenn der Elektromagnet stromlos ist. Hierfür sind nur geringe axiale Kräfte erforderlich und erwünscht, um einen kleinen Elektromagneten verwenden zu können.

Die DE 40 21 310 A1 zeigt eine Kupplungs-Bremskombination, bei der in einer von zwei Schaltstellungen das Abtriebselement gegen das feststehende Gehäuse festgebremst ist.

Schließlich zeigt die US-A-4,564,092 eine Doppelkupplung mit zwei Elektromagneten und zwei zugeordneten Ankerscheiben, wobei in jeder Schaltstellung jeweils ein Elektromagnet auf die zugeordnete Ankerscheibe wirkt. Die Ankerscheiben sind jeweils separat durch mehrere Biegefedem aufgehängt, die eine axiale Auslenkung der Ankerscheiben zulassen und gleichzeitig zur Drehmomentübertragung dienen.

Der Erfindung liegt die Aufgabe zugrunde, bei einer gattungsgemäßen Doppelkupplung die spielfreie Übertragungsfähigkeit in einem kleinen, insbesondere axial kurzen Bauraum zu verbessern. Sie wird gemäß der Erfindung durch die Merkmale des Anspruchs 1 gelöst. Weitere Ausgestaltungen ergeben sich aus den Unteransprüchen.

Nach der Erfindung erzeugt ein Federsystem die Axialkraft zur Drehmomentübertragung in der zweiten Schaltstellung, wenn der Elektromagnet stromlos ist. Das Federsystem besteht aus der Membranfeder und zusätzlichen, insbesondere axial wirkenden Federn. Die Membranfeder überträgt hauptsächlich das Drehmoment spielfrei, während die übrigen Federn vor allem die Axialkräfte erzeugen, die für den Reibschluß in der zweiten Schaltstellung erforderlich sind. Da die Ankerscheibe ein relativ schmaler Ring ist, der nur eine geringe Masse hat, und sich in axialer Richtung reibungsfrei bewegt, können die axial wirkenden Federn des Federsystems relativ schwach dimensioniert werden. Trotzdem können über den Reibschluß der Reibflächen große Drehmomente übertragen und kurze Schaltzeiten erreicht werden.

Gemäß einer Ausgestaltung der Erfindung kann das übertragbare Moment in der zweiten Stellung dadurch modifiziert werden, daß die Reibfläche an dem zweiten Antriebselement von einem Reibbelag gebildet wird, so daß die Reibpaarung, die von magnetischen Bedingungen unabhängig gewählt werden kann, ausschließlich auf die Erfordernisse des Antriebs abgestimmt werden kann.

Da die zusätzlichen Federn des Federsystems kein Drehmoment übertragen müssen, können sie gemäß einer Ausgestaltung der Erfinparallel zur Membranfeder vorgesehen sein. Zweckmäßigerweise sind mehrere Biegefedern auf dem Umfang verteilt, wobei sie so angeordnet und gestaltet sind, daß sie weniger zur Drehmomentübertragung beitragen als vorzugsweise die axialen Kräfte erzeugen. Hierzu eignen sich vor allem ringförmige Blattfedern, die vorzugsweise eine nierenförmige Gestalt haben und an den gleichen Stellen wie die Membranfeder befestigt sind.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längs-Schnitt durch einen Antrieb mit einer erfindungsgemäßen Doppelkupplung,
- Fig. 2: eine Membranfeder in einer Draufsicht,
- Fig. 3: eine Ringfeder mit nierenförmigen Biegefedern,
- Fig. 4: schematisch einen Längs-Schnitt durch eine Drehmaschine,
- Fig. 5: eine Seiten-Ansicht eines Riemengetriebes,
- Fig. 6: eine Seiten-Ansicht einer Ausgestaltung eines Riemengetriebes und
- Fig. 7: einen Längs-Schnitt durch einen Teil des Riemengetriebes gemäß Fig. 6.

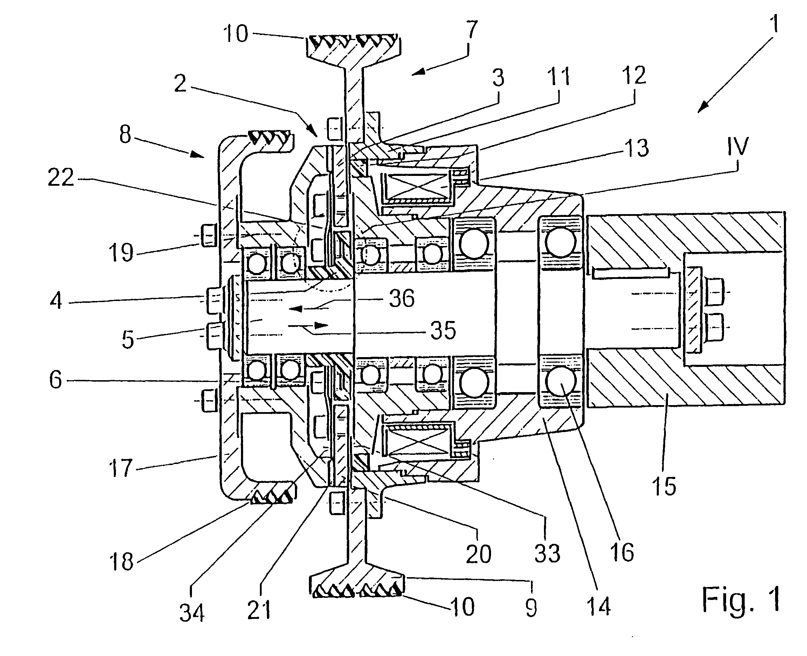

Der Antrieb 1 nach Fig. 1 besitzt eine Abtriebsscheibe 15, die fest auf einer Welle 5 montiert ist. Ferner ist ein erstes Antriebselement 7 vorgesehen, das von einer Riemenscheibe 9 mit Keilriemen 10 gebildet wird. Die Riemenscheibe 9 ist an einem Magnetflußleitkörper 11 befestigt. Dieser ist auf der Welle 5 mittels zweier Wälzlager 16 drehbar gelagert.

Ferner ist auf der Welle 5 ein zweites Antriebselement 8 in Form einer Riemenscheibe 17 mit einem Keilriemen 18 und einem Lagerteil 19 mittels Wälzlager 16 gelagert. Zwischen dem Lagerteil 19 und dem Magnetflußleitkörper 11 ist eine ringförmige Ankerscheibe 3 angeordnet, die über eine Membranfeder 6 und mehrere Biegefedern 22 mit einem Nabenteil 4 verbunden ist, das fest auf der Welle 5 sitzt. Während das Nabenteil 4 zweckmäßigerweise aus einem Werkstoff mit einer hohen magnetischen Reluktanz hergestellt ist, ist die Ankerscheibe 3 magnetisierbar und besitzt eine geringe Masse. An den Stirnflächen 33, 34 der Ankerscheibe 3 befinden sich Reibflächen, die mit einer Reibfläche 20 an dem Magnetflußleitkörper 11 und einem Reibbelag 21 an dem Lagerteil 19 zusammenarbeiten. Um eine magnetische Durchflutung der Ankerscheibe 3 sicherzustellen, besitzt der Magnetflußleitkörper 11 einen Isolierring 12.

Die Ankerscheibe 3 kann durch einen ringförmigen Elektromagneten 13, der in einem Kupplungsgehäuse 14 untergebracht ist, in einer axialen Richtung 35 in eine erste Schaltstellung gebracht werden, wenn er bestromt wird. In dieser Stellung liegt die Stirnfläche 33 der Ankerscheibe 3 mit ihrer Reibfläche an der Reibfläche 20 des Magnetflußleitkörpers 11 an und bildet einen Reibschluß, so daß die Abtriebsscheibe 15 über die Welle 5, das Nabenteil 4, die Membranfeder 6 und den Magnetflußleitkörper 11 spielfrei mit dem ersten Antriebselement 7 verbunden ist. So wird eine erste Kupplung einer Doppelkupplung 2 gebildet.

Bei unbestromten Elektromagneten 13 wird die Ankerscheibe 3 insbesondere durch die Biegefedern 22 in Richtung 36 in eine zweite Schaltstellung bewegt, in der die Stirnfläche 34 mit ihrer Reibfläche an dem Reibbelag 21 anliegt, der die Reibfläche an dem Lagerteil 19 bildet. In der zweiten Schaltstellung besteht eine kraftschlüssige Verbindung zwischen der Antriebsscheibe 15 und dem zweiten Antriebselement 8, wobei das übertragbare Moment durch die Reibpaarung zwischen dem Reibbelag 21 und der Ankerscheibe 3 und insbesondere durch die axiale Kraft der Biegefedern 22 bestimmt wird. Dadurch wird die zweite Kupplung der Doppelkupplung 2 gebildet. Da die Masse der Ankerscheibe 3 sehr gering ist und bei ihrer axialen Verlagerung keine Reibung auftritt, können mit relativ geringen Federkräften kurze Schaltzeiten und große übertragbare Drehmomente erreicht werden.

Durch die unterschiedlichen Durchmesser der Riemenscheibe 9 des ersten Antriebselements 7 und der Riemenscheibe 17 des zweiten Antriebselements 8 werden unterschiedliche Übersetzungsstufen realisiert, die in weiten Grenzen frei wählbar sind.

Die Funktion der Drehmomentübertragung und die Funktion der axialen Verstellung der Ankerscheibe 3 sind voneinander getrennt, wobei die Membranfeder 6 zur spielfreien Drehmomentübertragung in Umfangsrichtung sehr steif und in axialer Richtung sehr weich ausgelegt ist. Demgegenüber erzeugen die Biegefedern 22 vor allem axiale Stellkräfte.

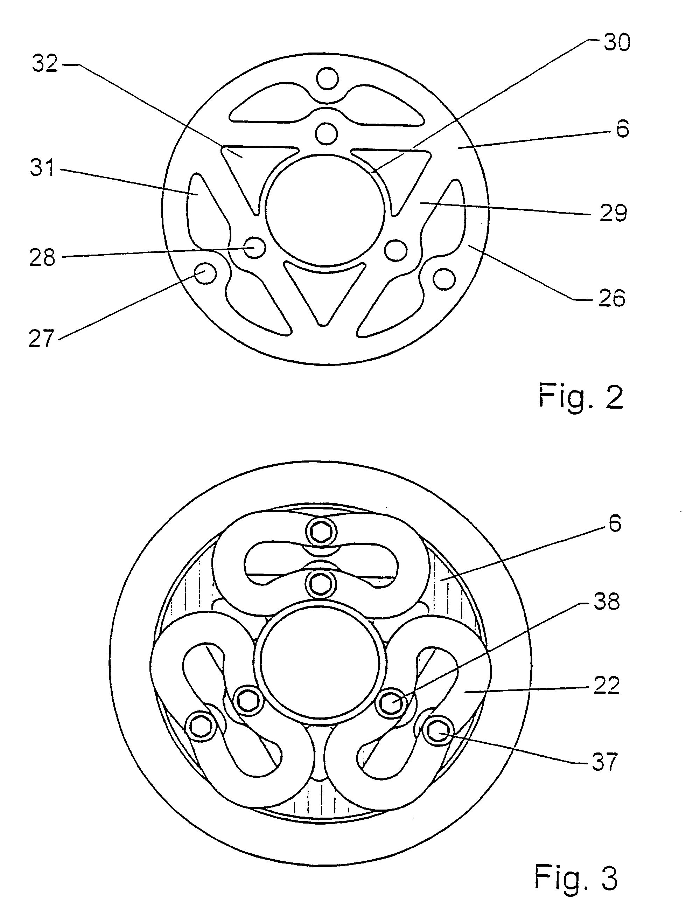

Aus Fig. 2 geht die besondere Gestaltung der Membranfeder 6 hervor. Sie besitzt einen äußeren Umfangsbereich 26 mit Schraubenlöchern 27 zur Befestigung an der Ankerscheibe 3. Von dem Umfangsbereich 26 gehen Segmentstege 29 aus, die Schraubenlöcher 28 zur Befestigung an dem Nabenteil 4 haben. Zwischen dem Randbereich und den Segmentstegen 29 werden nierenförmige Durchbrüche 31 gebildet, die eine axiale Bewegung zwischen den Schraubenlöchern 27 und 28 zulassen, während in Umfangsrichtung die Segmentstege 29 eine sehr steife Ausführung ergeben. Die Steifigkeit in Umfangsrichtung wird durch einen Innenring 30 erhöht, der die Segmentstege 29 miteinander verbindet. Die Segmentstege 29 und der Innenring 30 bilden annähernd gleichseitige Durchbrüche 32.

Die Membranfeder 6 wird zweckmäßigerweise so gestaltet und angeordnet, daß sie bei bestromten Elektromagneten 13, also in der ersten Schaltposition, plan an der Ankerscheibe 3 anliegt.

Die Biegefedern 22 können stabförmige Blattfedern sein. In der Ausführung nach Fig. 3 besitzen sie jedoch eine ringförmige, nierenförmige Gestalt. In dieser Ausführung sind drei Biegefedern 22 auf den Umfang gleichmäßig verteilt, wobei sie an den langen Seiten mit Schrauben 37 und 38 an den gleichen Stellen befestigt sind wie die Membranfeder 6.

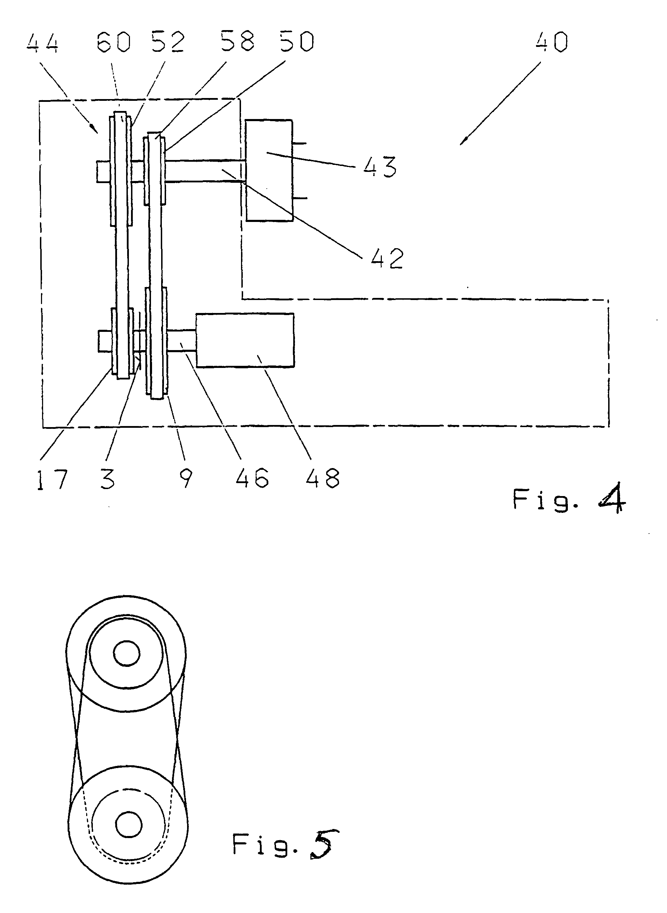

In der schematischen Fig. 4 ist eine Drehmaschine 40 mit einer Spindelwelle 42 gezeigt, auf der eine Spannvorrichtung 43 angeordnet ist und die über ein schaltbares, zweistufiges Riemengetriebe 44 durch eine Motorwelle 46 eines elektrischen Antriebsmotors 48 antreibbar ist. Das Riemengetriebe 44 weist eine kleine Riemenscheibe 50 und eine große Riemenscheibe 52 auf, die beide drehfest auf der Spindelwelle 42 angeordnet sind. Daneben sind eine große Riemenscheibe 9 sowie eine kleine Riemenscheibe 17 gezeigt, die beide drehbar auf der achsversetzten Motorwelle 46 gelagert sind. Die Riemenscheiben 50, 9 sowie die Riemenscheiben 52, 17 sind jeweils von einem Übertragungsriemen 58, 60 umschlungen. Die auf der Motorwelle 46 drehbar gelagerten Riemenscheiben 9, 17 sind über eine in Fig. 1 dargestellte, elektromagnetisch betätigbare, spielfreie Doppelkupplung 2 wahlweise mit der Motorwelle 46 kuppelbar.

Wie aus Fig. 1 erkennbar ist, ist die Doppelkupplung radial innerhalb der größeren Riemenscheibe 9 und axial teilweise innerhalb des Bauraums angeordnet, der von den Riemenscheiben 9, 17 beansprucht wird. Vorhandene Einbauräume für das Riemengetriebe können daher optimal genutzt werden.

In der Ausführungsform einer Drehmaschine gemäß Fig. 4 ist die Doppelkupplung 2 auf der Motorwelle 46 koaxial zur Hauptachse des Antriebsmotors 48 angeordnet, wobei die Ankerscheibe 3 der Doppelkupplung drehfest mit der Motorwelle verbunden ist. Auf diese Weise bilden Motor und der schaltbare Teil des Riemengetriebes ein kompaktes Modul.

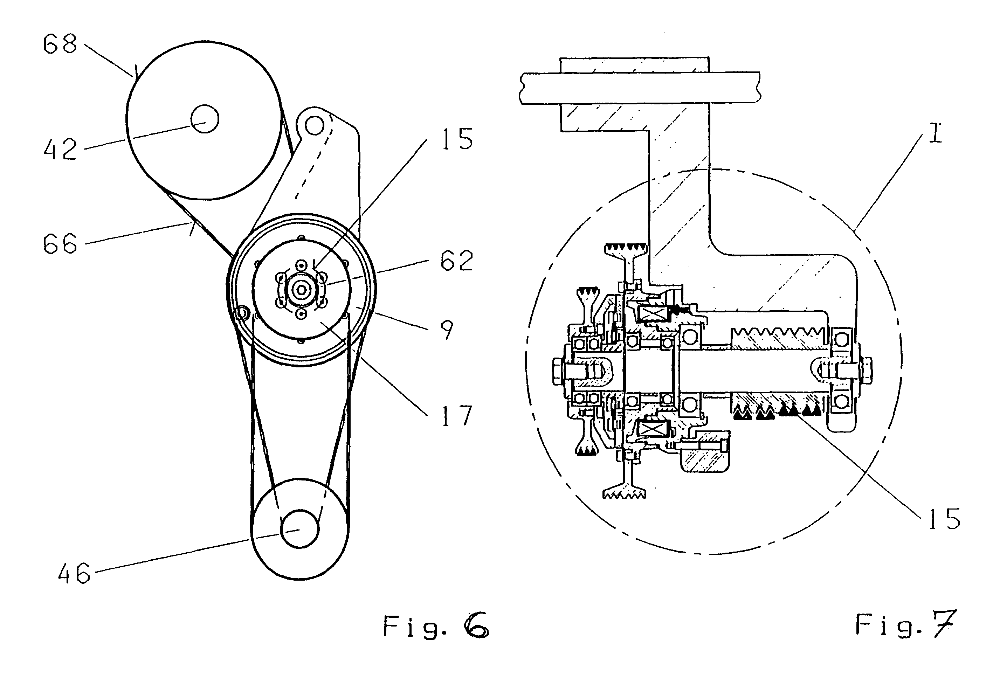

Anderen Einbauverhältnissen und Anforderungen an die Gesamtübersetzung kann mit einer in Fig. 6 dargestellten Variante entsprochen werden. Hierbei ist eine Zwischenwelle 62 vorhanden, auf der neben zwei Riemenscheiben 9, 17, die Teil der zweistufigen Übersetzungsvorrichtung sind, eine weitere Riemenscheibe 15 (Fig. 7) angeordnet ist, die über einen dritten Übertragungsriemen 66 trieblich mit einer koaxial zur Drehspindelwelle 42 angeordneten Riemenscheibe 68 verbunden ist. In der Ausführungsform einer Drehmaschine gemäß Fig. 6 sind die beiden Übersetzungsstufen des Riemengetriebes also zwischen der Motorwelle 46 und der Zwischenwelle 62 angeordnet. Zwischen der Zwischenwelle 62 und der Drehspindelwelle 42 ist ein einfaches Riemengetriebe mit fester Übersetzung vorgesehen. Alternativ könnte die feste Übersetzung zwischen Motorwelle 46 und Zwischenwelle 62 vorgesehen werden und der zweistufige Teil zwischen Zwischenwelle 62 und der Drehspindelwelle 42.

### Bezugszeichen

- 1: Antrieb
- 2: Doppelkupplung
- 3: Ankerscheibe
- 4: Nabenteil
- 5: Welle
- 6: Membranfeder
- 7: erstes Antriebselement
- 8: zweites Antriebselement
- 9: Riemenscheibe
- 10: Keilriemen
- 11: Magnetflußleitkörper
- 12: Isolierring
- 13: Elektromagnet
- 14: Kupplungsgehäuse
- 15: Abtriebsscheibe
- 16: Wälzlager
- 17: Riemenscheibe
- 18: Keilriemen
- 19: Lagerteil
- 20: Reibfläche
- 21: Reibbelag
- 22: Biegefeder
- 23: Nabenteil
- 24: Schraubenfeder
- 25: Tellerfeder
- 26: Umfangsbereich
- 27: Schraubenloch
- 28: Schraubenloch
- 29: Segmentsteg
- 30: Innenring
- 31: Durchbruch
- 32: Durchbruch
- 33: Stirnfläche
- 34: Stirnfläche
- 35: Richtung
- 36: Richtung
- 37: Schraube
- 38: Schraube
- 40: Drehmaschine
- 42: Drehspindelwelle
- 43: Spannvorrichtung
- 44: Riemengetriebe
- 46: Motorwelle
- 48: elektrischer Antriebsmotor
- 50: Riemenscheibe
- 52: Riemenscheibe
- 58: Übertragungsriemen
- 60: Übertragungsriemen
- 62: Zwischenwelle
- 66: Übertragungsriemen
- 68: Riemenscheibe

## Patentansprüche

1. Doppelkupplung (2) mit einem Elektromagneten (13) und einer Ankerscheibe (3), die an ihren Stimflächen (33, 34) Reibflächen aufweist, die je nach Schaltstellung mit Reibflächen (20, 21) an einem ersten oder zweiten Antriebselement (7, 8) zusammenwirken, wobei am Umfang der Ankerscheibe verteilt mehrere Biegefedem (22) angeordnet sind und in einer ersten Schaltstellung der stromdurchflossene Elektromagnet (13) eine für die Drehmomentübertragung erforderliche Axialkraft erzeugt, **dadurch gekennzeichnet, dass** eine zur Drehmomentübertragung benötigte Axialkraft in einer zweiten Schaltstellung von den Biegefedem (22) erzeugt wird, wenn der Elektromagnet (13) stromlos ist, und dass die Ankerscheibe (3) über mindestens eine Membranfeder (6) drehfest und axial beweglich mit einer Welle (5) verbunden ist, wobei die Membranfeder zur spielfreien Drehmomentübertragung dient.

2. Doppelkupplung (2) nach Anspruch 1, **dadurch gekennzeichnet, dass** die Biegefedern (22) ringförmige Blattfedern sind.

3. Doppelkupplung (2) nach Anspruch 2, **dadurch gekennzeichnet, dass** die Biegefedern (22) eine nierenförmige Gestalt haben.

4. Doppelkupplung (2) nach einem der Ansprüche 1 bis 3, **dadurch gekennzeichnet, dass** die Biegefedem (22) an den gleichen Stellen der Ankerscheibe (3) bzw. der Welle (5) oder des Nabenteils (4) befestigt sind wie die Membranfeder (6).

5. Doppelkupplung (2) nach einem der vorhergehenden Ansprüche, **dadurch gekennzeichnet, dass** die Membranfeder (6) in der ersten Schaltposition im wesentlichen eben an der Ankerscheibe (3) und dem Nabenteil (4) anliegt.

6. Doppelkupplung (2) nach einem der vorhergehenden Ansprüche, **dadurch gekennzeichnet , dass** die Membranfeder (6) einen äußeren Umfangsbereich (26) mit Schraubenlöchem (27) aufweist, von dem aus Segmentstege (29) mit Schraubenlöchem (28) ausgehen.

7. Doppelkupplung (2) nach Anspruch 6, **dadurch gekennzeichnet, dass** die Segmentstege (29) durch einen Innenring (30) miteinander verbunden sind.

8. Doppelkupplung (2) nach einem der vorhergehenden Ansprüche, **dadurch gekennzeichnet , dass** die Reibfläche an dem zweiten Antriebselement (8) von einem Reibbelag (21) gebildet wird.

9. Schaltbares, zweistufiges Riemengetriebe (44) mit zwei drehfest auf einer ersten Welle (42) angeordneten Riemenscheiben (58, 60) und mit zwei drehbar auf einer zweiten, achversetzten Welle (46) gelagerten Riemenscheiben (9, 17), wobei jeweils zwei Riemenscheiben (9, 50; 7, 52) von einem Übertragungsriemen (58, 60) umschlungen sind, wobei die auf der zweiten Welle (46) gelagerten Riemenscheiben (9, 17) über eine Doppelkupplung (2) nach einem der vorhergehenden Ansprüche wahlweise mit der zweiten Welle (46) kuppelbar sind.

10. Riemengetriebe nach Anspruch 9, **dadurch gekennzeichnet, dass** die Doppelkupplung (2) wenigstens teilweise im axialen Bauraum angeordnet ist, der von den Riemenscheiben (9, 17) beansprucht wird.

11. Riemengetriebe nach einem der Ansprüche 9 oder 10, **dadurch gekennzeichnet, dass** eine Zwischenwelle (62) vorhanden ist, auf der neben zwei Riemenscheiben (9, 17), die Teil der zweistufigen Obersetzungsvorrichtung sind, eine fünfte Riemenscheibe (15) angeordnet ist, die über einen dritten Übertragungsriemen (66) trieblich mit einer sechsten Riemenscheibe (68) verbunden ist.

12. Drehmaschine mit einem Riemengetriebe nach einem der Ansprüche 9 bis 11.

## Claims

1. Dual clutch (2) with an electromagnet (13) and an armature disc (3), which comprises at its front faces (33, 34) friction surfaces which co-operate with friction surfaces (20, 21) at a first or second drive element (7, 8), depending on the shift position, wherein a plurality of spiral springs (22) are distributed over the circumference of the armature disc and produce an axial force required for transmitting torque in a first shift position of the energised electromagnet (13), **characterised in that** an axial force which is required for transmitting torque is produced by the spiral springs (22) in a second shift position, when the electromagnet (13) is de-energised, and that the armature disc (3) is connected in a non-rotatable and axially mobile manner to a shaft (5) via at least one diaphragm spring (6), wherein the diaphragm spring serves to transmit torque free from play.

2. Dual clutch (2) according to Claim 1, **characterised in that** the spiral springs (22) are annular leaf springs.

3. Dual clutch (2) according to Claim 2, **characterised in that** the spiral springs (22) are of kidney-shaped design.

4. Dual clutch (2) according to any one of Claims 1 to 3, **characterised in that** the spiral springs (22) are fastened to the same points of the armature disc (3) or the shaft (5) or the hub part (4) as the diaphragm spring (6).

5. Dual clutch (2) according to any one of the preceding Claims, **characterised in that** the diaphragm spring (6) lies substantially flatly against the armature disc (3) and the hub part (4) in the first shift position.

6. Dual clutch (2) according to any one of the preceding Claims, **characterised in that** the diaphragm spring (6) comprises an outer circumferential region (26) with screw holes (27), from which segmental webs (29) with screw holes (28) extend.

7. Dual clutch (2) according to Claim 6, **characterised in that** the segmental webs (29) are connected together by an inner ring (30).

8. Dual clutch (2) according to any one of the preceding Claims, **characterised in that** the friction surface at the second drive element (8) is formed by a friction lining (21) .

9. Change-speed, two-stage belt transmission (44) with two belt pulleys (58, 60) which are non-rotatably disposed on a first shaft (42) and with two belt pulleys (9, 17) which are rotatably mounted on a second, axially staggered shaft (46), wherein a transmission belt (58, 60) wraps around each two belt pulleys (9, 50; 7, 52), wherein the belt pulleys (9, 17) which are mounted on the second shaft (46) can be selectively coupled to the second shaft (46) via a dual clutch (2) according to any one of the preceding Claims.

10. Belt transmission according to Claim 9, **characterised in that** the dual clutch (2) is disposed at least partly in the axial construction space which is occupied by the belt pulleys (9, 17).

11. Belt transmission according to either of Claims 9 and 10, **characterised in that** an intermediate shaft (62) is provided, on which, in addition to two belt pulleys (9, 17), which are part of the two-stage transmission device, a fifth belt pulley (15) is disposed, this being connected in driving terms to a sixth belt pulley (68) via a third transmission belt (66).

12. Lathe with a belt transmission according to any one of Claims 9 to 11.

## Revendications

1. Double embrayage (2) doté d'un électroaimant (13) et d'un disque d'induit (3), celui-ci comportant sur ses faces frontales (33, 34) des surfaces de friction, lesquelles communiquent - en fonction de la position d'enclenchement - avec les surfaces de friction (20, 21) d'un premier ou d'un deuxième élément de transmission (7, 8), sachant que sur le pourtour du disque d'induit sont disposés plusieurs ressorts de flexion (22) et sachant que dans une première position d'enclenchement l'électroaimant (13), qui est traversé par un courant, génère une force axiale nécessaire pour la transmission du couple, **caractérisé en ce que** une force axiale nécessaire pour la transmission du couple est générée dans une deuxième position d'enclenchement par des ressorts de flexion (22), si l'électroaimant (13) n'est pas traversé par le courant et **en ce que** le disque d'induit (3) est lié par au moins un ressort à diaphragme (6) solidaire en rotation, étant en même temps orientable dans le sens axial, à un arbre (5), sachant que le ressort à diaphragme sert à la transmission du couple sans jeu.

2. Double embrayage (2) selon la revendication **1, caractérisé en ce que** les ressorts de flexion (22) sont des ressorts à lames annulaires.

3. Double embrayage (2) selon la revendication 2, **caractérisé en ce que** les ressorts de flexion (22) sont réniformes.

4. Double embrayage (2) selon une des revendications 1 à 3, **caractérisé en ce que** les ressorts de flexion (22) sont fixés au même endroit sur le disque d'induit (3) et/ou l'arbre (5) ou la partie du moyeu (4) que le ressort à diaphragme (6).

5. Double embrayage (2) selon une des revendications précédentes, **caractérisé en ce que** le ressort à diaphragme (6) dans la première position d'enclenchement est essentiellement en appui de manière plane contre le disque d'induit (3) et la partie du moyeu (4).

6. Double embrayage (2) selon une des revendications précédentes, **caractérisé en ce que** sur un segment extérieur du pourtour (26) du ressort à diaphragme (6) sont prévus des alésages pour vis (27) et **en ce que** de ce segment extérieur partent des nervures (29) dotées d'alésages pour vis (28).

7. Double embrayage (2) selon la revendication 6, **caractérisé en ce que** les nervures des segments (29) sont connectées par une bague intérieure (30).

8. Double embrayage (2) selon une des revendications précédentes, **caractérisé en ce que** la surface de friction du deuxième élément de transmission (8) est formée par une garniture de friction (21).

9. Boîte à courroies à deux étages couplable (44) dotée de deux courroies (58, 60) disposées de façon solidaire en rotation sur un premier arbre (42) et de deux courroies (9, 17) logées de façon pivotante sur un deuxième arbre désaxé (46), sachant que respectivement deux courroies (9, 50 ; 7, 52) sont enlacées d'une courroie de transmission (58, 60), et sachant que les courroies (9, 17) logées sur le deuxième arbre (46) sont couplables par l'intermédiaire d'un double embrayage (2) et selon une des revendications précédentes au choix avec le deuxième arbre (46).

10. Boîte à courroies selon la revendication 9, **caractérisé en ce que** le double embrayage (2) est disposé au moins partiellement dans l'espace d'encombrement axial, qui est occupé par les courroies (9, 17).

11. Boîte à courroies selon une des revendications 9 ou 10, **caractérisé en ce que** est prévu un arbre intermédiaire (62) sur lequel, en plus des deux courroies (9, 17) faisant partie du dispositif de démultiplication à deux étages, est disposée une cinquième courroie (15), celle-ci étant connectée par l'intermédiaire d'une troisième courroie (66) de façon motrice avec une sixième courroie (68).

12. Machine tournante dotée d'une boîte à courroies selon une des revendications 9 à 11.
